(19) Europäisches Patentamt
European Patent Office
Office européen des brevets

(11) EP 4 273 188 A1

(12) **EUROPEAN PATENT APPLICATION**
published in accordance with Art. 153(4) EPC

(43) Date of publication:
**08.11.2023 Bulletin 2023/45**

(21) Application number: **22898965.3**

(22) Date of filing: **21.11.2022**

(51) International Patent Classification (IPC):
***C08J 3/24*** (2006.01) ***C08J 3/12*** (2006.01)

(52) Cooperative Patent Classification (CPC):
**C08J 3/12; C08J 3/24**

(86) International application number:
**PCT/KR2022/018380**

(87) International publication number:
**WO 2023/096283 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2021 KR 20210163717**
**18.11.2022 KR 20220155321**

(71) Applicant: **Lg Chem, Ltd.**
**Seoul 07336 (KR)**

(72) Inventors:
- **JU, Jin Hyuck**
  **Daejeon 34122 (KR)**
- **YOON, Hyungki**
  **Daejeon 34122 (KR)**
- **SHIN, Kwangin**
  **Daejeon 34122 (KR)**
- **AHN, Taebin**
  **Daejeon 34122 (KR)**

(74) Representative: **Plasseraud IP**
**66, rue de la Chaussée d'Antin**
**75440 Paris Cedex 09 (FR)**

# (54) METHOD FOR PREPARING SUPER ABSORBENT POLYMER

(57) Provided is a method of preparing a superabsorbent polymer, more particularly, a method of preparing a superabsorbent polymer, in which a cationic polymer is included as a surface crosslinking agent, thereby achieving excellent general absorption-related properties.

EP 4 273 188 A1

## Description

[Technical Field]

Cross-reference to Related Application

The present application is based on, and claims priority from, Korean Patent Application Nos. 10-2021-0163717 and 10-2022-0155321, filed on November 24, 2021 and November 18, 2022, respectively, the disclosures of which are hereby incorporated by reference herein in their entirety.

The present invention relates to a method of preparing a superabsorbent polymer.

[Background Art]

A superabsorbent polymer (SAP) is a synthetic polymeric material capable of absorbing moisture from 500 to 1000 times its own weight. Various manufacturers have denominated it as different names, such as SAM (Super Absorbency Material), AGM (Absorbent Gel Material), etc. Since such superabsorbent polymers started to be practically applied in sanitary products, now they have been widely used not only for hygiene products such as disposable diapers for children, etc., but also for water retaining soil products for gardening, water stop materials for the civil engineering and construction, sheets for raising seedling, fresh-keeping agents for food distribution fields, materials for poultice, or the like.

In most cases, these superabsorbent polymers have been widely used in the field of sanitary materials such as diapers or sanitary napkins. Inside the sanitary materials, the superabsorbent polymer is generally distributed throughout pulp. However, recent efforts have been continuously made to provide sanitary materials such as diapers having a thinner thickness, etc., and as part of that, diapers having a reduced content of pulp, and furthermore, diapers having no pulp, so-called pulpless diapers are actively under development.

As described above, such a sanitary material having a reduced content of pulp or having no pulp includes the superabsorbent polymer at a relatively high ratio, and the superabsorbent polymer particles are inevitably included as multiple layers in the sanitary materials. In order to allow the whole superabsorbent polymer particles included as multiple layers to more efficiently absorb a large amount of liquid such as urine, etc., it is necessary that the superabsorbent polymer basically exhibits high absorption performance and high absorption rate. To this end, a method of crosslinking the surface of the superabsorbent polymer is used.

The surface crosslinking of the superabsorbent polymer is to form a surface-crosslinked layer by linking functional groups such as carboxyl groups which are present on the surface of the superabsorbent polymer. Through this surface crosslinking, physical properties of the superabsorbent polymer may be improved. However, when the surface-crosslinked layer is formed by this method, the physical strength may increase, but the absorption rate of the superabsorbent polymer may decrease. Accordingly, there is a need for a method of forming the surface-crosslinked layer without deteriorating the intrinsic physical properties of the superabsorbent polymer.

[Disclosure]

[Technical Problem]

There is provided a method of preparing a superabsorbent polymer, in which the above-described problems may be solved by using a polymeric material of a specific component when a surface-crosslinked layer of the superabsorbent polymer is formed.

[Technical Solution]

There is provided a method of preparing a superabsorbent polymer, the method including the step of forming a water-containing gel polymer by crosslinking-polymerizing a water-soluble ethylenically unsaturated monomer having acidic groups, of which at least part is neutralized, in the presence of a polymerization initiator and an internal crosslinking agent; the step of forming a base polymer powder by drying, pulverizing, and classifying the water-containing gel polymer; and the surface crosslinking step of forming a surface-crosslinked layer by crosslinking the surface of the base polymer powder in the presence of a surface crosslinking agent and a cationic polymer, wherein the cationic polymer includes quaternary ammonium ions in repeating units.

There is also provided a superabsorbent polymer including a base polymer powder including a crosslinked polymer of a water-soluble ethylenically unsaturated monomer having acidic groups, of which at least part is neutralized; and a surface-crosslinked layer which is formed on the base polymer powder by further crosslinking the crosslinked

polymer via a surface crosslinking agent, wherein the surface-crosslinked layer includes a cationic polymer including quaternary ammonium ions in repeating units.

As used herein, the terms "first, second", and the like are used to describe a variety of components, and these terms are merely employed to differentiate one component from other components.

Further, the terms used in this description are just for explaining exemplary embodiments and it is not intended to restrict the present invention.

The singular expression may include the plural expression unless it is differently expressed contextually.

It must be understood that the term "include", "equip", or "have" in the present description is only used for designating the existence of characteristics taken effect, numbers, steps, components, or combinations thereof, and do not exclude the existence or the possibility of addition of one or more different characteristics, numbers, steps, components, or combinations thereof beforehand.

Further, in this specification, when a layer or an element is mentioned to be formed "on" or "above" layers or elements, it means that each layer or element is directly formed on the layers or elements, or other layers or elements may be additionally formed between the layers, subjects, or substrates.

The present invention may be variously modified and have various forms, and specific exemplary embodiments are exemplified and explained in detail in the following description. However, it is not intended to limit the present invention to the specific exemplary embodiments, and it must be understood that the present invention includes every modifications, equivalents, or replacements included in the spirit and technical scope of the present invention.

Throughout this specification, physiological saline means physiological saline (0.9 wt% NaCl(s)).

Hereinafter, the present invention will be described in detail.

According to one aspect of the present invention, provided is a method of preparing a superabsorbent polymer, the method including the step of forming a water-containing gel polymer by crosslinking-polymerizing a water-soluble ethylenically unsaturated monomer having acidic groups, of which at least part is neutralized, in the presence of a polymerization initiator and an internal crosslinking agent; the step of forming a base polymer powder by drying, pulverizing, and classifying the water-containing gel polymer; and the surface crosslinking step of forming a surface-crosslinked layer by crosslinking the surface of the base polymer powder in the presence of a surface crosslinking agent and a cationic polymer, wherein the cationic polymer includes quaternary ammonium ions in repeating units.

The present inventors found that, upon surface crosslinking, which is a process of preparing a superabsorbent polymer, when a cationic polymer is included, in addition to a general surface crosslinking agent commonly used, physical and chemical properties of having a long polymer chain and cations in the molecule contribute to the formation of a surface-crosslinked layer by the surface crosslinking agent, and thus it is possible to improve absorbency under high pressure and permeability while maintaining a water retention capacity and an absorption rate of the prepared superabsorbent polymer, thereby completing the present invention.

Hereinafter, each step of the method of preparing the superabsorbent polymer of one embodiment will be described in more detail.

For reference, as used herein, the term "polymer" refers to those in a polymerized state of a water-soluble ethylenically unsaturated monomer, and may encompass all water content ranges, all particle size ranges, all surface-crosslinking state, or processing state. Among the above polymers, a polymer having a water content (moisture content) of about 40% by weight or more in a state after polymerizing before drying may be referred to as a water-containing gel polymer. Further, among the polymers, a polymer having a particle size of 150 $\mu$m or less may be referred to as "fine particle".

Further, the "superabsorbent polymer" refers to, depending on the context, the polymer itself, or is used to encompass those made suitable for commercialization by performing an additional process on the polymer, for example, surface crosslinking, re-assembling of fine particles, drying, pulverizing, classifying, etc.

**(Polymerization)**

First, the step of forming a water-containing gel polymer is a step of forming a water-containing gel polymer by crosslinking-polymerizing a water-soluble ethylenically unsaturated monomer having acidic groups, of which at least part is neutralized, in the presence of a polymerization initiator and an internal crosslinking agent.

A monomer mixture which is a raw material of the superabsorbent polymer may include a water-soluble ethylenically unsaturated monomer having acidic groups, of which at least part is neutralized, more specifically, an acrylic acid-based monomer, and a polymerization initiator.

**(Monomer)**

The acrylic acid-based monomer is a compound represented by the following Chemical Formula 1:

[Chemical Formula 1] $R^1$-$COOM^1$

in Chemical Formula 1,

$R_1$ is a C2-C5 alkyl group containing an unsaturated bond, and
$M^1$ is a hydrogen atom, a monovalent or divalent metal, an ammonium group, or an organic amine salt.

The acrylic acid-based monomer may specifically include, for example, one or more selected from the group consisting of acrylic acid, methacrylic acid, and a monovalent metal salt thereof, a divalent metal salt thereof, an ammonium salt thereof, and an organic amine salt thereof.
Here, the acrylic acid-based monomer has acidic groups, of which at least part may be partially neutralized. Preferably, those partially neutralized with an alkali material such as sodium hydroxide, potassium hydroxide, ammonium hydroxide, etc. may be used as the monomer. In this regard, a degree of neutralization of the acrylic acid-based monomer may be adjusted to about less than 70 mol%, or about 40 mol% to about 69 mol%, or about 50 mol% to about 65 mol%.
When the degree of neutralization is excessively high, the neutralized monomers precipitate, and thus polymerization may not readily occur. Furthermore, the effect of additional neutralization after the initiation of surface crosslinking is substantially eliminated, and thus the degree of crosslinking of the surface-crosslinked layer may not be optimized, and the permeability of the superabsorbent polymer may not be sufficient. On the contrary, when the degree of neutralization is excessively low, absorbency of the polymer greatly decreases, and furthermore, the polymer may exhibit hard-to-handle properties, like elastic rubber.
The concentration of the monomer may be about 20% by weight to about 60% by weight, or about 30% by weight to about 55% by weight, or about 40% by weight to about 50% by weight with respect to the monomer mixture including the raw materials of the superabsorbent polymer and a solvent, and may be appropriately controlled, taking into consideration a polymerization time and reaction conditions, etc.
When the concentration of the monomer is too low, the yield of the superabsorbent polymer may be low and a problem may occur in economic feasibility. On the contrary, when the concentration of the monomer is too high, a part thereof may precipitate or problems may be generated in the process, such as low pulverization efficiency during pulverization of the polymerized water-containing gel polymer, and physical properties of the superabsorbent polymer may deteriorate.

**(Polymerization initiator)**

The polymerization initiator used in the method of preparing the superabsorbent polymer of one embodiment is not particularly limited, as long as it is generally used in the preparation of the superabsorbent polymer.
Specifically, the polymerization initiator may be a thermal polymerization initiator or a photopolymerization initiator by UV radiation, depending on the polymerization method. However, even in the case of the photopolymerization method, a certain amount of heat may be generated by UV irradiation, etc., and a certain amount of heat may be generated with the polymerization reaction which is an exothermic reaction, and therefore, a thermal polymerization initiator may be further included.
As the photopolymerization initiator, a compound capable of forming radicals by a light such as UV may be used without limitations in view of composition.
As the photopolymerization initiator, for example, one or more selected from the group consisting of benzoin ether, dialkyl acetophenone, hydroxyl alkylketone, phenyl glyoxylate, benzyl dimethyl ketal, acyl phosphine, and $\alpha$-aminoketone may be used. Meanwhile, specific examples of acyl phosphine may include commercially available lucirin TPO, i.e., 2,4,6-trimethylbenzoyl-trimethyl phosphine oxide. More various photopolymerization initiators are well disclosed in ‘UV Coatings: Basics, Recent Developments and New Application (Elsevier, 2007)’ written by Reinhold Schwalm, p 115, however, they are not limited to the above described examples.
Further, as the thermal polymerization initiator, one or more selected from the group consisting of persulfate-based initiators, azo-based initiators, hydrogen peroxide, and ascorbic acid may be used. Specifically, examples of the persulfate-based initiators may include sodium persulfate ($Na_2S_2O_8$), potassium persulfate ($K_2S_2O_8$), ammonium persulfate ($(NH_4)_2S_2O_8$) or the like. Examples of the azo-based initiators may include 2,2-azobis(2-amidinopropane)dihydrochloride, 2,2-azobis-(N,N-dimethylene)isobutyramidine dihydrochloride, 2-(carbamoylazo)isobutyronitrile, 2,2-azobis[2-(2-imidazolin-2-yl)propane] dihydrochloride, 4,4-azobis-(4-cyanovaleric acid) or the like. More various thermal polymerization initiators are well-disclosed in ‘Principle of Polymerization (Wiley, 1981)’ written by Odian, p203, however, they are not limited to the above described examples.
These polymerization initiators may be added at a concentration of about 0.001% by weight to about 1% by weight, preferably about 0.1% by weight to about 0.9% by weight with respect to the total weight of the monomer mixture. When the concentration of the polymerization initiator is too low, the polymerization rate may become slow and a large

amount of residual monomer may be extracted in the final product, which is not preferred. On the contrary, when the concentration of the polymerization initiator is higher than the above range, polymer chains constituting the network become short, and thus the content of water-soluble components is increased and physical properties of the polymer may deteriorate, such as a reduction in absorbency under pressure, which is not preferred.

**(Internal crosslinking agent)**

According to one embodiment of the present invention, the monomer mixture includes an internal crosslinking agent as a raw material of the superabsorbent polymer. Such an internal crosslinking agent is for crosslinking the inside of the polymer in which the acrylic acid-based monomer is polymerized, that is, the base polymer, and the internal crosslinking agent is distinguished from a surface crosslinking agent for crosslinking the surface of the polymer.
The type of the internal crosslinking agent is not particularly limited, and any internal crosslinking agent which has been previously used for preparing the superabsorbent polymer may be used. Specific examples of the internal crosslinking agent may include a poly(meth)acrylate-based compound of a polyol having 2 to 20 carbon atoms, a polyglycidyl ether-based compound of a polyol having 2 to 20 carbon atoms, or an allyl (meth)acrylate-based compound having 2 to 20 carbon atoms.
More specific examples of these internal crosslinking agents may include trimethylolpropane tri(meth)acrylate, ethylene glycol di(meth)acrylate, polyethylene glycol di(meth)acrylate, propylene glycol di(meth)acrylate, polypropylene glycol di(meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentacrylate, glycerin tri(meth)acrylate, pentaerythritol tetraacrylate, ethylene glycol diglycidyl ether, polyethylene glycol diglycidyl ether, glycerol polyglycidyl ether, propylene glycol diglycidyl ether or polypropylene glycol diglycidyl ether, etc., and other various multifunctional compounds may be used as the internal crosslinking agent.
Such an internal crosslinking agent may be included at a concentration of about 0.01% by weight to about 1% by weight, or about 0.05% by weight to about 0.8% by weight, or about 0.2% by weight to about 0.7% by weight with respect to the total weight of the monomer mixture, thereby introducing the crosslinking structure into the water-containing gel polymer and the base polymer powder formed therefrom.
When the concentration of the internal crosslinking agent is excessively low, the absorption rate of the superabsorbent polymer may decrease, and the gel strength may become weak, which is not preferred. On the contrary, when the concentration of the internal crosslinking agent is excessively high, the absorption capacity of the superabsorbent polymer may decrease, which is not preferred as an absorber.

**(Other additives and Monomer mixture)**

In addition, the monomer mixture may further include a blowing agent and a foam stabilizer, if necessary.
The blowing agent serves to increase the surface area of the water-containing gel polymer by forming pores inside the water-containing gel polymer by foaming, in the monomer mixture during polymerization.
As the blowing agent, carbonate may be used. For example, sodium bicarbonate, sodium carbonate, potassium bicarbonate, potassium carbonate, calcium bicarbonate, calcium carbonate, magnesium bicarbonate, or magnesium carbonate, etc. may be used.
Further, the blowing agent is preferably used in an amount of 1500 ppmw or less, or about 1300 ppmw or less with respect to the weight of the water-soluble ethylenically unsaturated monomer. When the use of the blowing agent is too large, too many pores are formed to deteriorate gel strength of the superabsorbent polymer and to decrease density, which may cause problems in distribution and storage. Further, the blowing agent is preferably used in an amount of 500 ppmw or more, or 1000 ppmw or more with respect to the weight of the water-soluble ethylenically unsaturated monomer.
Meanwhile, in the above-described preparation method of one embodiment, the monomer mixture may further include additives, such as a thickener, a plasticizer, a preservation stabilizer, an antioxidant, etc., as needed.
The monomer mixture including the above-described monomer, polymerization initiator, internal crosslinking agent, and water-soluble ethylenically unsaturated monomer having acidic groups of which at least part is neutralized, and optionally, other additives may be prepared in the form of a solution, in which the monomer mixture is dissolved in a solvent.
In this regard, as the applicable solvent, any solvent may be used without limitations in the composition, as long as it is able to dissolve the above-described components. For example, one or more selected from water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene,

xylene, butyrolactone, carbitol, methyl cello solve acetate, N,N-dimethylacetamide or the like may be used in combination.

The solvent may be included in a residual amount with respect to the total amount of the monomer mixture such that the concentration of each component is adjusted to the above-described range.

**(Polymerization)**

Meanwhile, the method of forming the water-containing gel polymer by thermal polymerization or photopolymerization of the monomer mixture is not particularly limited in view of constitution, as long as it is a polymerization commonly used.

Specifically, the polymerization method may be largely classified into thermal polymerization and photo-polymerization according to a polymerization energy source.

Commonly, when the thermal polymerization is carried out, it may be carried out in a reactor like a kneader equipped with agitating spindles, and when the photo-polymerization is carried out, it may be carried out in a reactor equipped with a movable conveyor belt. However, the above-described polymerization method is only one example, and the present invention is not limited to the above-described polymerization method.

For example, the water-containing gel polymer obtained by thermal polymerization by a method of providing hot air for the reactor like the kneader equipped with the agitating spindles, as described above, or by heating the reactor may have a size of several centimeters or millimeters, according to the type of agitating spindles equipped in the reactor. Specifically, the size of the obtained water-containing gel polymer may vary according to the concentration of the monomer mixture fed thereto, a feeding speed or the like, and the water-containing gel polymer having a weight average particle size of 2 mm to 50 mm or 3 to 30 mm may be generally obtained.

Further, when photopolymerization is performed in the reactor equipped with the movable conveyor belt, as described above, the obtained water-containing gel polymer may be usually in the form of a sheet having the width of the belt. In this regard, the thickness of the polymer sheet may vary according to the concentration of the monomer mixture fed thereto and the feeding speed. Usually, the monomer mixture is preferably supplied to obtain a sheet-like water-containing gel polymer having a thickness of 0.5 cm to 5 cm or 1 cm to 3 cm.

When the monomer mixture is supplied to such an extent that the thickness of the sheet-like polymer becomes too thin, it is undesirable because the production efficiency is low, and when the thickness of the sheet-like polymer is more than 5 cm, the polymerization reaction may not evenly occur over the entire thickness because of the excessive thickness.

The water-containing gel polymer obtained by the above-mentioned method may have a water content of about 40% by weight to about 80% by weight or about 50% by weight to about 70% by weight. Meanwhile, the "water content" as used herein means a weight occupied by water with respect to the total weight of the water-containing gel polymer, which may be a value obtained by subtracting the weight of the dry polymer from the weight of the water-containing gel polymer.

Specifically, the water content is defined as a value calculated by measuring the weight loss due to evaporation of moisture in the polymer during the process of drying by raising the temperature of the polymer through infrared heating. At this time, the water content is measured under the drying conditions determined as follows: the temperature is increased from room temperature to about 180°C and then the temperature is maintained at about 180°C, and the total drying time is set to about 20 minutes, including about 5 minutes for the temperature rising step.

(Drying)

Next, the step of drying the obtained water-containing gel polymer is performed.

As needed, the step of coarsely pulverizing may be further performed, before drying, in order to increase efficiency of the step of drying.

In this regard, a pulverizer to be used may include, but there is no limitation in the configuration, specifically, any one selected from the group consisting of a vertical pulverizer, a turbo cutter, a turbo grinder, a rotary cutter mill, a cutter mill, a disc mill, a shred crusher, a crusher, a chopper, and a disc cutter, but is not limited to the above-described examples.

At this time, the step of pulverizing may be performed such that the water-containing gel polymer has a particle size of about 2 mm to about 10 mm, or about 3 mm to about 8 mm. The particle size of the water-containing gel polymer may be defined as the longest distance among straight distances connecting arbitrary points on the surface of the water-containing gel polymer.

Pulverizing the water-containing gel polymer into a particle size of less than 2 mm is technically not easy due to a high water content of the water-containing gel polymer, and a phenomenon of agglomeration may occur between the pulverized particles. In contrast, when the water-containing gel polymer is pulverized into a particle size of larger than 10 mm, the effect of increasing the efficiency in the subsequent drying step may be poor.

The water-containing gel polymer pulverized as above or the water-containing gel polymer immediately after polymerization without pulverization is subjected to drying.

In this regard, the drying temperature of the drying step may be about 150°C to about 250°C. When the drying temperature is lower than 150°C, it is apprehended that the drying time becomes too long and the physical properties of the superabsorbent polymer finally formed may be deteriorated. When the drying temperature is higher than 250°C, it is apprehended that only the polymer surface is excessively dried, and thus fine particles may be generated during the subsequent pulverization process and the physical properties of the superabsorbent polymer finally formed may be deteriorated. Therefore, the drying may be performed at a temperature of about 150 °C to about 200 °C, more preferably at a temperature of about 160 °C to about 180 °C.

Meanwhile, the drying time may be about 20 minutes to about 90 minutes, or about 30 minutes to about 70 minutes, in consideration of the process efficiency, but is not limited thereto.

In the step of drying, any drying method may be used without limitation in view of constitution, as long as it is commonly used in the process of drying the water-containing gel polymer. Specifically, the step of drying may be carried out by a method such as hot air supply, infrared irradiation, microwave irradiation or ultraviolet irradiation, etc.

After the step of drying as above, the water content of the polymer may be about 0.1% by weight to about 10% by weight, or about 1% by weight to about 8% by weight. When the water content after drying is excessively low, the water-containing gel polymer may deteriorate during the drying process, and the physical properties of the superabsorbent polymer may be deteriorated. On the contrary, when the water content is excessively high, absorption performances may deteriorate due to a large amount of water in the superabsorbent polymer, or it may be difficult to perform the subsequent processing.

Next, the step of pulverizing the dried polymer which is obtained through the step of drying is performed.

The polymer powder obtained after the step of pulverizing may have a particle size of about 150 μm to about 850 μm. A pulverizer which may be used to achieve the above particle size may specifically include a pin mill, a hammer mill, a screw mill, a roll mill, a disc mill, or a jog mill, etc., but the present invention is not limited to the above-described examples.

In order to manage the physical properties of the superabsorbent polymer powder that is finally commercialized after the step of pulverizing, a separate process of classifying the polymer powder obtained after the pulverization may be carried out according to the particle size, and the polymer powder may be classified at a predetermined weight ratio according to the range of the particle size.

**(Surface crosslinking)**

The step of surface crosslinking is a step of forming the superabsorbent polymer having more improved physical properties by inducing a crosslinking reaction on the surface of the pulverized polymer in the presence of a surface crosslinking solution including the surface crosslinking agent. Through this surface crosslinking, a surface-crosslinked layer is formed on the surface of the pulverized and classified base polymer powder.

In general, since the surface crosslinking agent is applied on the surface of the base polymer powder, the surface crosslinking reaction occurs on the surface of the base polymer powder, which improves the crosslinkability on the surface of the particles without substantially influencing the inside of the particles. Therefore, the surface-crosslinked superabsorbent polymer particles have a higher degree of crosslinking around the surface than the inside because the crosslinked polymer on the surface of the base polymer powder is additionally crosslinked.

Meanwhile, as the surface crosslinking agent, compounds capable of reacting with the functional groups of the base polymer may be used, and for example, polyhydric alcohol compounds, polyepoxy compounds, haloepoxy compounds, or alkylene carbonate compounds, and the like may be used without particular limitation.

Specifically, examples of the polyhydric alcohol compounds may include one or more selected from the group consisting of di-, tri-, tetra- or polyethylene glycol, 1,3-propanediol, dipropylene glycol, 2,3,4-trimethyl-1,3-pentanediol, polypropylene glycol, glycerol, polyglycerol, 2-butene-1,4-diol, 1,4-butanediol, 1,3-butanediol, 1,5-pentanediol, 1,6-hexanediol, and 1,2-cyclohexanedimethanol.

Further, as the polyepoxy compounds, one or more selected from the group consisting of ethylene glycol diglycidyl ether, diethylene glycol diglycidyl ether, triethylene glycol diglycidyl ether, tetraethylene glycol diglycidyl ether, glycerin polyglycidyl ether, and sorbitol polyglycidyl ether may be used.

Further, as the haloepoxy compounds, epichlorohydrin, epibromohydrin, and α-methylepichlorohydrin may be used. Meanwhile, as mono-, di- or polyoxazolidinone compound, for example, 2-oxazolidinone, etc. may be used.

Further, as the alkylene carbonate compounds, ethylene carbonate, propylene carbonate, etc. may be used. These compounds may be used alone or in combination thereof.

The method of preparing the superabsorbent polymer of the present invention further includes a cationic polymer in addition to the above-described general surface crosslinking agent. The cationic polymer refers to a material having cations in the main chain or side chain of the molecule. When the surface crosslinking reaction is carried out by adding

the cationic polymer together with the surface crosslinking agent, it is possible to maintain absorbency under high pressure while maintaining a water retention capacity even at a high crosslinking density due to the interaction between the ions present in the polymer and the existing surface crosslinking agent. In addition, permeability may also be improved by evenly treating the surface of the base polymer.

Meanwhile, the cationic polymer may have one or more cations selected from the group consisting of ammonium, imidazolium, pyridinium, phosphonium, and sulfonium. Preferably, the cationic polymer contains cations in repeating units, and more preferably, ammonium ion groups in repeating units. The ammonium ions may be classified into primary to quaternary ammonium ions depending on the number of hydrogen atoms replaced by organic groups in the ammonium ions. For example, the cationic polymer may include quaternary ammonium ions in repeating units, but the present invention is not necessarily limited thereto.

According to one embodiment of the present invention, the cationic polymer may include repeating units derived from ethylenically unsaturated monomers to which ammonium ions are linked. For example, the ethylenically unsaturated monomer may include (meth)acrylic acid, (meth)acrylate, (meth)acrylamide, vinyl acetate, ethylene, propylene, butadiene, and styrene. In addition, the ammonium ion may be directly linked to the ethylenically unsaturated monomer-derived repeating unit or linked via $C_{1-10}$ alkylene.

Further, according to one embodiment of the present invention, the cationic polymer may include cyclic ammonium ions in the repeating units. The cyclic ammonium ion refers to a structure in which at least two or more organic groups replaced in the ammonium ion are bound to each other to form a ring. In addition, the cyclic ammonium ion may be in a form in which the monomers of the cationic polymer are converted into a cyclic form during polymerization, or the monomers of the cationic polymer may include the cyclic ammonium ions.

The cationic polymer specifically includes, for example, one or more selected from the group consisting of poly(diallyldimethylammonium chloride), poly(2-(methacryloyloxy)ethyltrimethylammonium methylsulfate), poly(2-dimethylamino)ethyl methacrylate methyl chloride quaternary salt), and poly(acrylamide-dimethylaminoethyl acrylate quaternary salt). Meanwhile, the poly(diallyldimethylammonium chloride) includes a repeating unit represented by the following Chemical Formula 1, and the poly(2-(methacryloyloxy)ethyltrimethylammonium methylsulfate) is a compound including a repeating unit represented by the following Chemical Formula 2:

[Chemical Formula 1]

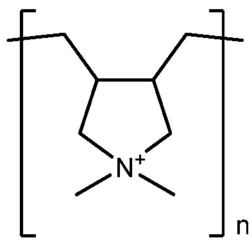

[Chemical Formula 2]

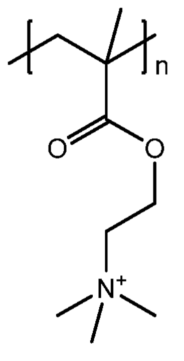

Preferably, the cationic polymer may have a weight average molecular weight of 50,000 g/mol to 700,000 g/mol, more preferably, 80,000 g/mol to 600,000 g/mol, or 100,000 g/mol to 500,000 g/mol. When the weight average molecular weight of the cationic polymer satisfies the above range, it is suitable for coating the base polymer through interaction with the existing surface crosslinking agent, thereby improving general absorption properties.

Preferably, the cationic polymer may be included in an amount of 0.01 part by weight to 0.9 parts by weight

with respect to 100 parts by weight of the base polymer. More preferably, the cationic polymer may be included in an amount of 0.3 parts by weight to 0.8 parts by weight, or 0.05 parts by weight to 0.5 parts by weight with respect to 100 parts by weight of the base polymer. When the cationic polymer is included in the above range, it is suitable for coating the base polymer, thereby improving absorbency under high pressure and permeability at the same time.

Meanwhile, the content of the surface crosslinking agent may be appropriately selected according to the type of the surface crosslinking agent to be added, or reaction conditions, but the surface crosslinking agent may be commonly used in an amount of about 0.001 part by weight to about 5 parts by weight, or about 0.005 parts by weight to about 2 parts by weight, or about 0.01 part by weight to about 1 part by weight, or about 0.02 parts by weight to about 0.5 parts by weight with respect to about 100 parts by weight of the base polymer powder. When the content of the surface crosslinking agent is too low, the surface crosslinking reaction hardly occurs, and when the content of the surface crosslinking agent is too high, basic absorption properties such as water retention capacity, etc. may decrease due to excessive surface crosslinking reaction.

When the surface crosslinking agent is added, water is additionally mixed therewith, and added in the form of a surface crosslinking solution. When water is added, it is advantageous in that the surface crosslinking agent may be evenly dispersed in the base polymer powder. At this time, the amount of water to be added may be preferably added in an amount of about 1 part by weight to about 10 parts by weight with respect to 100 parts by weight of the base polymer in order to induce uniform dispersion of the surface crosslinking agent, to prevent agglomeration of the base polymer powder, and at the same time, to optimize the surface penetration depth of the surface crosslinking agent.

Meanwhile, the surface crosslinking reaction may be performed using the above-described surface crosslinking solution further including one or more inorganic materials selected from the group consisting of silica, clay, alumina, silica-alumina composite, titania, zinc oxide, and aluminum sulfate, in addition to the cationic polymer. The inorganic material may be used in the form of powder or liquid, and particularly, in the form of alumina powder, silica-alumina powder, titania powder, or a nanosilica solution. Further, the inorganic material may be used in an amount of about 0.05 parts by weight to about 2 parts by weight with respect to 100 parts by weight of the base polymer.

Further, in the surface crosslinking process, as the surface crosslinking is performed by adding multivalent metal cations instead of or together with the inorganic material, the surface crosslinking structure of the superabsorbent polymer may be further optimized. This is presumably because the metal cation forms a chelate with a carboxyl group (COOH) of the superabsorbent polymer to further reduce a crosslinking distance.

Further, the method of adding the inorganic material and/or multivalent metal cations to the base polymer powder as needed is not limited in terms of its constitution. For example, a method of adding and mixing the surface crosslinking agent with the base polymer powder in a reactor, a method of spraying the surface crosslinking agent onto the base polymer powder, and a method of continuously mixing the base polymer powder and the surface crosslinking agent while providing them to a mixer that is continuously operated, etc. may be used.

When the surface crosslinking agent is added, water and methanol may be further added by mixing them therewith. When water and methanol are added, there is an advantage that the surface crosslinking agent may be evenly dispersed in the base polymer powder. At this time, amounts of water and methanol to be added may be properly controlled in order to induce uniform dispersion of the surface crosslinking agent, to prevent agglomeration of the base polymer powder, and at the same time, to optimize the surface penetration depth of the surface crosslinking agent.

Meanwhile, the surface-modification step is performed on the base polymer powder by increasing the temperature of the mixture of the base polymer powder and the surface crosslinking solution by heating.

The surface crosslinking step may be performed under well-known conditions according to the kind of the surface crosslinking agent, for example, at a temperature of about 140 °C to about 200 °C for about 20 minutes to about 60 minutes. In a more specific embodiment, the surface crosslinking step may be performed by heating by adding the surface crosslinking agent to the base polymer powder having an initial temperature of about 20 °C to about 80 °C, increasing the temperature to the maximum temperature of about 140 °C to about 200 °C, or about 175 °C to about 195 °C over about 10 minutes to about 30 minutes, and maintaining the maximum temperature for about 5 minutes to about 60 minutes.

Depending on the surface crosslinking conditions, basic absorption properties of the superabsorbent polymer, such as water retention capacity, etc., and permeability and/or absorbency under pressure may be optimized together.

A heating means for the surface crosslinking reaction is not particularly limited. Heating may be performed by providing a heating medium or by directly providing a heat source. In this regard, the kind of the applicable heating medium may be steam, hot air, a hot fluid such as hot oil or the like, but is not limited thereto. The temperature of the heating medium to be provided may be properly selected in consideration of the means of the heating medium, the heating rate, and the heating target temperature. Meanwhile, as the heat source to be directly provided, an electric heating or gas heating method may be used, but the present invention is not limited to the above-described examples.

**(Superabsorbent polymer)**

Meanwhile, the preparation method may further include the step of classifying the base polymer consisting of the crosslinked polymer on which the surface-crosslinked layer is formed.

Through the step of classifying the base polymer consisting of the crosslinked polymer on which the surface-crosslinked layer is formed, according to the particle size, the physical properties of the superabsorbent polymer particles finally commercialized may be managed. Through these processes such as pulverization and classification, etc., the superabsorbent polymer obtained therefrom is appropriately prepared and provided to have a particle size of about 150 μm to about 850 μm. More specifically, about 90% by weight, preferably, 95% by weight or more of the base polymer on which the surface-crosslinked layer is formed has a particle size of about 150 μm to about 850 μm, and fine particles having a particle size of less than about 150 μm may be included in an amount of less than about 3% by weight.

As described above, as the particle size distribution of the superabsorbent polymer is adjusted to a desirable range, the superabsorbent polymer finally prepared may exhibit the excellent general absorption properties. Therefore, in the above step of classifying, the polymer having a particle size of about 150 μm to about 850 μm may be classified and commercialized.

Meanwhile, the present invention provides a superabsorbent polymer including a base polymer powder including a crosslinked polymer of a water-soluble ethylenically unsaturated monomer having acidic groups, of which at least part is neutralized; and a surface-crosslinked layer which is formed on the base polymer powder by further crosslinking the crosslinked polymer via a surface crosslinking agent, wherein the surface-crosslinked layer includes a cationic polymer including quaternary ammonium ions in repeating units.

As described above, the superabsorbent polymer according to the preparation method of the present invention includes the surface-crosslinked layer in which the cationic polymer is distributed in the surface crosslinking structure of the surface of the base polymer by adding the cationic polymer in the step of surface crosslinking. Description of the surface crosslinking agent including the cationic polymer constituting the surface-crosslinked layer is as described above.

According to one embodiment of the present invention, the cationic polymer may include repeating units derived from ethylenically unsaturated monomers to which ammonium ions are linked. For example, the ethylenically unsaturated monomer may include (meth)acrylic acid, (meth)acrylate, (meth)acrylamide, vinyl acetate, ethylene, propylene, butadiene, and styrene. In addition, the ammonium ion may be directly linked to the ethylenically unsaturated monomer-derived repeating unit or linked via $C_{1-10}$ alkylene.

Further, according to one embodiment of the present invention, the cationic polymer may include cyclic ammonium ions in the repeating units. The cyclic ammonium ion refers to a structure in which at least two or more organic groups replaced in the ammonium ions are bound to each other to form a ring. In addition, the cyclic ammonium ion may be in a form in which the monomers of the cationic polymer are converted into a cyclic form during polymerization, or the monomers of the cationic polymer may include the cyclic ammonium ions.

Preferably, the cationic polymer includes one or more selected from the group consisting of poly(diallyldimethylammonium chloride), poly(2-(methacryloyloxy)ethyltrimethylammonium methylsulfate), poly(2-dimethylamino)ethyl methacrylate methyl chloride quaternary salt), and poly(acrylamide-dimethylaminoethyl acrylate quaternary salt).

Preferably, as the surface crosslinking agent, compounds capable of reacting with the functional groups of the base polymer may be used, and for example, polyhydric alcohol compounds, polyepoxy compounds, haloepoxy compounds, or alkylene carbonate compounds, and the like may be used without particular limitation.

Specific examples of the polyhydric alcohol compounds, polyepoxy compounds, haloepoxy compounds, or alkylene carbonate compounds are as described above, and exemplified by di-, tri-, tetra- or polyethylene glycol, 1,3-propanediol, dipropylene glycol, 2,3,4-trimethyl-1,3-pentanediol, polypropylene glycol, glycerol, polyglycerol, 2-butene-1,4-diol, 1,4-butanediol, 1,3-butanediol, 1,5-pentanediol, 1,6-hexanediol, 1,2-cyclohexanedimethanol, ethylene glycol diglycidyl ether, diethylene glycol diglycidyl ether, triethylene glycol diglycidyl ether, tetraethylene glycol diglycidyl ether, glycerin polyglycidyl ether, sorbitol polyglycidyl ether, ethylenediamine, diethylenetriamine, triethylenetetraamine, tetraethylenepentamine, pentaethylenehexamine, polyethyleneimine, polyamidepolyamine, epichlorohydrin, epibromohydrin, α-methylepichlorohydrin, 2-oxazolidinone, ethylene carbonate, propylene carbonate, etc.

Based on this, the superabsorbent polymer of the present invention may have improved absorbency under pressure while maintaining a water retention capacity due to the surface-crosslinked layer formed on the base polymer, and may achieve excellent absorbency under high pressure and permeability even at a high crosslinking density.

As used herein, the term "CRC", also called centrifugal retention capacity, refers to the amount of a solution absorbed under no load. The CRC may be measured in accordance with EDANA WSP 241.3, and a detailed measurement method is described in Example below. Preferably, CRC of the superabsorbent polymer is 25 g/g to 40 g/g, or 30 g/g to 35 g/g.

As used herein, the term "AUP", also called absorbency under pressure, refers to the amount of a solution absorbed under a predetermined pressure (0.7 psi). The AUP may be measured in accordance with EDANA WSP 242.3, and a detailed measurement method is described in Example below. Preferably, AUP of the superabsorbent polymer

is 10 g/g to 30 g/g. More preferably, AUP of the superabsorbent polymer is 13 g/g to 25 g/g.

As used herein, the term "EFFC" is also called effective capacity, and may be obtained by substituting the centrifugal retention capacity (CRC) and 0.7 psi absorbency under pressure (AUP) into Equation 3 below:

[Equation 3]

$$\text{Effective capacity} = \{\text{Centrifugal retention capacity (CRC)} + 0.7\text{ psi Absorbency under pressure(AUP)}\}/2$$

Preferably, EFFC of the superabsorbent polymer is 22 g/g to 30 g/g. more preferably, EFFC of the superabsorbent polymer is 23 g/g to 28 g/g, or 25 g/g to 28 g/g.

As used herein, the term "vortex", also called absorption rate, refers to the rate at which a solution is absorbed into the superabsorbent polymer. A detailed method of measuring the vortex is described in Example below. Preferably, the vortex of the superabsorbent polymer is 40 seconds or less. More preferably, the vortex of the superabsorbent polymer is 35 seconds or less, 30 seconds or less, or 25 seconds or less. Meanwhile, as the vortex is more excellent, as the value is smaller, and therefore, the lower limit of the vortex is theoretically 0 second, but for example, the vortex of the superabsorbent polymer is 10 seconds or more, 15 seconds or more, or 20 seconds or more.

As used herein, the term "permeability" refers to ability to rapidly transfer a solution absorbed by a superabsorbent polymer to another superabsorbent polymer, in other words, mobility of the solution in the superabsorbent polymer. Meanwhile, a detailed method of measuring the permeability is described in Example below. Preferably, the permeability of the superabsorbent polymer is 18 seconds or less. More preferably, the permeability of the superabsorbent polymer is 17 seconds or less, 16 seconds or less, or 15 seconds or less. Meanwhile, as the permeability is more excellent, as the value is smaller, and therefore, the lower limit of the permeability is theoretically 0 second, but for example, the permeability of the superabsorbent polymer is 3 seconds or more, 5 seconds or more, or 10 seconds or more.

Further, the superabsorbent polymer of the present invention may satisfy one or more, preferably two or more of the physical property ranges of centrifugal retention capacity (CRC), absorbency under pressure (AUP), effective capacity (EFFC), absorption rate (vortex), and permeability, as described, and more preferably, may satisfy all of them at the same time.

[Effect of the Invention]

According to a method of preparing a superabsorbent polymer of the present invention, it is possible to prepare a superabsorbent polymer having excellent general absorption properties even at a high crosslinking density by adding a cationic polymer during surface crosslinking.

[Best Mode for Carrying Out the Invention]

Hereinafter, the actions and effects of the present invention will be described in more detail with reference to specific exemplary embodiments of the present invention. However, these exemplary embodiments are provided only for illustrating the present invention, and the scope of the present invention is not limited thereto.

**<Preparation of base polymer>**

**Preparation Example**

An aqueous monomer solution composition was prepared by mixing 100 g of acrylic acid, 3.0 g of polyethylene glycol diacrylate (PEGDA, MW = 523) as a crosslinking agent, 0.008 g of phenylbis(2,4,6-trimethylbenzoyl)phosphine oxide as a photoinitiator, and 0.08 g of sodium persulfate (SPS) as a thermal initiator, 128 g of 31.5% caustic soda (NaOH), and 63.5 g of water.

The aqueous monomer solution composition was subjected to a photopolymerization reaction to obtain a polymerized sheet. The polymerized sheet was taken out and cut into a size of 3 cm X 3 cm, and a chopping process was performed using a meat chopper to prepare crumbs. The crumbs were dried in an oven capable of shifting airflow up and down, and evenly dried by flowing hot air at 185°C from the bottom to the top for 15 minutes and from the top to the bottom for 15 minutes such that the water content of the dry product after drying was 2% or less.

After drying, the product was pulverized using a pulverizer, and then classified for 10 minutes with an amplitude of 1.5 mm (mesh combination for classification: #20#30#50#100), and each classification fraction (10%/65%/22%/3%)

was collected, and base polymer particles having a particle size of about 150 μm to 850 μm were obtained.

**<Preparation of superabsorbent polymer>**

**Comparative Example 1**

100 parts by weight of the base polymer powder prepared in Preparation Example was evenly mixed with a surface crosslinking solution (5 parts by weight of water, 3 parts by weight of methanol, 0.06 parts by weight of ethylene glycol diglycidyl ether (EJ1030s, n=1)), and then a surface crosslinking reaction was performed at 140 °C for 30 minutes. Then, silica (Aerosil200, 0.1 part by weight) was added and mixed. After the surface treatment was completed, a superabsorbent polymer having an average particle size of 850 μm or less was prepared using a sieve.

**Example 1**

100 parts by weight of the base polymer powder prepared in Preparation Example was evenly mixed with a surface crosslinking solution (5 parts by weight of water, 3 parts by weight of methanol, 0.06 parts by weight of ethylene glycol diglycidyl ether (EJ1030s, n=1), 0.1 part by weight of poly(diallyldimethylammonium chloride) (manufacturer: SINOFLOC, Mw: 150,000 g/mol)), and then a surface crosslinking reaction was performed at 140 °C for 30 minutes. Then, silica (Aerosil200, 0.1 part by weight) was added and mixed. After the surface treatment was completed, a superabsorbent polymer having an average particle size of 850 μm or less was prepared using a sieve.

**Example 2**

100 parts by weight of the base polymer powder prepared in Preparation Example was evenly mixed with a surface crosslinking solution (5 parts by weight of water, 3 parts by weight of methanol, 0.06 parts by weight of ethylene glycol diglycidyl ether (EJ1030s, n=1), 0.1 part by weight of poly(2-(methacryloyloxy)ethyltrimethylammonium methyl sulfate (manufacturer: Senka, Mw: 400,000 g/mol)), and then a surface crosslinking reaction was performed at 140 °C for 30 minutes. Then, silica (Aerosil200, 0.1 part by weight) was added and mixed. After the surface treatment was completed, a superabsorbent polymer having an average particle size of 850 μm or less was prepared using a sieve.

**Comparative Example 2**

100 parts by weight of the base polymer powder prepared in Preparation Example was evenly mixed with a surface crosslinking solution (7 parts by weight of water, 3 parts by weight of methanol, 0.025 parts by weight of ethylene glycol diglycidyl ether (EJ1030s, n=1)), and then a surface crosslinking reaction was performed at 140 °C for 30 minutes. Then, silica (Aerosil200, 0.1 part by weight) was added and mixed. After the surface treatment was completed, a superabsorbent polymer having an average particle size of 850 μm or less was prepared using a sieve.

**Example 3**

100 parts by weight of the base polymer powder prepared in Preparation Example was evenly mixed with a surface crosslinking solution (7 parts by weight of water, 3 parts by weight of methanol, 0.025 parts by weight of ethylene glycol diglycidyl ether (EJ1030s, n=1), 0.05 parts by weight of poly(2-(methacryloyloxy)ethyltrimethylammonium methyl sulfate (manufacturer: Senka, Mw: 400,000 g/mol)), and then a surface crosslinking reaction was performed at 140 °C for 30 minutes. Then, silica (Aerosil200, 0.1 part by weight) was added and mixed. After the surface treatment was completed, a superabsorbent polymer having an average particle size of 850 μm or less was prepared using a sieve.

**Example 4**

100 parts by weight of the base polymer powder prepared in Preparation Example was evenly mixed with a surface crosslinking solution (7 parts by weight of water, 3 parts by weight of methanol, 0.025 parts by weight of ethylene glycol diglycidyl ether (EJ1030s, n=1), 0.1 part by weight of poly(2-(methacryloyloxy)ethyltrimethylammonium methyl sulfate (manufacturer: Senka, Mw: 400,000 g/mol)), and then a surface crosslinking reaction was performed at 140 °C for 30 minutes. Then, silica (Aerosil200, 0.1 part by weight) was added and mixed. After the surface treatment was completed, a superabsorbent polymer having an average particle size of 850 μm or less was prepared using a sieve.

**Example 5**

100 parts by weight of the base polymer powder prepared in Preparation Example was evenly mixed with a surface crosslinking solution (7 parts by weight of water, 3 parts by weight of methanol, 0.025 parts by weight of ethylene glycol diglycidyl ether (EJ1030s, n=1), 0.2 parts by weight of poly(2-(methacryloyloxy)ethyltrimethylammonium methyl sulfate (manufacturer: Senka, Mw: 400,000 g/mol)), and then a surface crosslinking reaction was performed at 140 °C for 30 minutes. Then, silica (Aerosil200, 0.1 part by weight) was added and mixed. After the surface treatment was completed, a superabsorbent polymer having an average particle size of 850 μm or less was prepared using a sieve.

**Example 6**

100 parts by weight of the base polymer powder prepared in Preparation Example was evenly mixed with a surface crosslinking solution (7 parts by weight of water, 3 parts by weight of methanol, 0.035 parts by weight of ethylene glycol diglycidyl ether (EJ1030s, n=1), 0.2 parts by weight of poly(2-(methacryloyloxy)ethyltrimethylammonium methyl sulfate (manufacturer: Senka, Mw: 400,000 g/mol)), and then a surface crosslinking reaction was performed at 140 °C for 30 minutes. Then, silica (Aerosil200, 0.1 part by weight) was added and mixed. After the surface treatment was completed, a superabsorbent polymer having an average particle size of 850 μm or less was prepared using a sieve.

**Example 7**

100 parts by weight of the base polymer powder prepared in Preparation Example was evenly mixed with a surface crosslinking solution (7 parts by weight of water, 3 parts by weight of methanol, 0.035 parts by weight of ethylene glycol diglycidyl ether (EJ1030s, n=1), 0.3 parts by weight of poly(2-(methacryloyloxy)ethyltrimethylammonium methyl sulfate (manufacturer: Senka, Mw: 400,000 g/mol)), and then a surface crosslinking reaction was performed at 140 °C for 30 minutes. Then, silica (Aerosil200, 0.1 part by weight) was added and mixed. After the surface treatment was completed, a superabsorbent polymer having an average particle size of 850 μm or less was prepared using a sieve.

**Comparative Example 3**

100 parts by weight of the base polymer powder prepared in Preparation Example was evenly mixed with a surface crosslinking solution (5 parts by weight of water, 3 parts by weight of methanol, 0.06 parts by weight of ethylene glycol diglycidyl ether (EJ1030s, n=1), 0.1 part by weight of polyethyleneimine (manufacturer: Polysciences, Inc., Mw: 100,000 g/mol)), and then a surface crosslinking reaction was performed at 140 °C for 30 minutes. Then, silica (Aerosil200, 0.1 part by weight) was added and mixed. After the surface treatment was completed, a superabsorbent polymer having an average particle size of 850 μm or less was prepared using a sieve.

**Comparative Example 4**

100 parts by weight of the base polymer powder prepared in Preparation Example was evenly mixed with a surface crosslinking solution (7 parts by weight of water, 3 parts by weight of methanol, 0.035 parts by weight of ethylene glycol diglycidyl ether (EJ1030s, n=1)), and then a surface crosslinking reaction was performed at 140 °C for 30 minutes. Then, poly(2-(methacryloyloxy)ethyltrimethylammonium methyl sulfate (manufacturer: Senka, Mw: 400,000 g/mol, 0.3 parts by weight) and silica (Aerosil200, 0.1 part by weight) were added and mixed. After the surface treatment was completed, a superabsorbent polymer having an average particle size of 850 μm or less was prepared using a sieve.

**Experimental Example**

Physical properties of the superabsorbent polymers obtained in Examples and Comparative Examples were measured by the following methods, respectively.

Unless otherwise indicated, evaluation of the physical properties of the superabsorbent polymers was performed on the polymers having a particle size of 150 μm ~ 850 μm which were classified using ASTM standard sieves.

(1) CRC

The centrifuge retention capacity by absorption capacity under no load was measured for each polymer in accordance with EDANA WSP 241.3.

In detail, after uniformly introducing $W_0$(g) (about 0.2 g) of the superabsorbent polymer in a nonwoven fabric-made bag and sealing the same, it was immersed in physiological saline (0.9 wt%) at room temperature (23 °C to 25

°C). After 30 minutes, the bag was dehydrated using a centrifuge at 250 G for 3 minutes, and then the weight $W_2$(g) of the bag was measured. Further, after carrying out the same operation without using the superabsorbent polymer, the weight $W_1$(g) of the bag was measured. CRC (g/g) was calculated using each obtained weight according to the following Equation:

[Equation 1]

$$CRC\ (g/g) = \{[W_2(g) - W_1(g)]/W_0(g)\} - 1$$

(2) 0.7 AUP

0.7 psi absorbency under pressure of each superabsorbent polymer was measured in accordance with the EDANA method WSP 242.3.

First, upon measuring absorbency under pressure, the classified polymer used at the time of CRC measurement was used.

In detail, a 400 mesh stainless steel net was installed in the bottom of a plastic cylinder having an internal diameter of 25 mm. The superabsorbent polymer $W_0$(g) (0.16 g) was uniformly scattered on the steel net under conditions of room temperature (23 °C to 25 °C) and humidity of 50%. A piston capable of uniformly providing a load of 0.7 psi was placed thereon, in which an external diameter of the piston was slightly smaller than 25 mm, there was no gab between the internal wall of the cylinder and the piston, and the jig-jog of the cylinder was not interrupted. At this time, the weight $W_3$(g) of the apparatus was measured.

After placing a glass filter having a diameter of 90 mm and a thickness of 5 mm in a petri dish having a diameter of 150 mm, a physiological saline solution consisting of 0.9% by weight of sodium chloride was poured until the surface level of the physiological saline solution became equal to the upper surface of the glass filter. A sheet of filter paper having a diameter of 90 mm was placed on the glass filter. The measurement apparatus was mounted on the filter paper, thereby getting the liquid absorbed under the load for 1 hour. 1 hour later, the weight $W_4$(g) was measured after lifting the measurement apparatus up.

Absorbency under pressure (g/g) was calculated using each of the obtained weights according to the following Equation.

[Equation 2]

$$AUP(g/g) = [W_4(g) - W_3(g)]/W_0(g)$$

(3) EFFC

Effective capacity (EFFC) was obtained by substituting the centrifuge retention capacity (CRC) measured in (1) and 0.7 psi absorbency under pressure (AUP) measured in (2) into the following Equation 3:

[Equation 3]

$$\text{Effective capacity} = \{\text{Centrifugal retention capacity (CRC)} + \text{0.7 psi Absorbency under pressure(AUP)}\}/2$$

**(4) Vortex**

Vortex was measured in accordance with the Japanese standard (JIS K 7224).

In detail, 2 g of the superabsorbent polymer was introduced into 50 mL of physiological saline of 25 °C, and under stirring with a magnetic bar (diameter 8 mm, length 30 mm) at 600 rpm, a time taken until vortex disappeared was measured in the unit of seconds, thus calculating the vortex.

**(5) Permeability**

Permeability was measured according to the following Equation.

[Equation 4]

$$Perm = [20\ mL / T1\ (sec)] * 60\ sec$$

in Equation 4,

Perm represents permeability of the superabsorbent polymer, and

T1 represents a time (seconds) taken for 20 mL of physiological saline to pass through swollen superabsorbent polymer under a pressure of 0.3 psi after putting 0.2 g of the superabsorbent polymer in a cylinder and pouring physiological saline (0.9% by weight of aqueous sodium chloride solution) until the superabsorbent polymer was completely submerged and swollen for 30 minutes. The measurement was performed at room temperature (23 °C to 25 °C).

In detail, a cylinder and a piston were prepared. As the cylinder, a cylinder having an inner diameter of 20 mm, and equipped with a glass filter and a stopcock at the bottom was used. As the piston, a piston was used, in which a screen having an outer diameter slightly smaller than 20 mm and freely moving the cylinder upward and downward was positioned at the bottom, a weight was positioned at the top, and the screen and weight were connected by a rod. In the piston, a weight capable of applying a pressure of 0.3 psi due to the addition of the piston was installed.

While the stopcock of the cylinder was locked, 0.2 g of the superabsorbent polymer was put, and an excessive amount of physiological saline (0.9% by weight of an aqueous sodium chloride solution) was poured such that the superabsorbent polymer was completely submerged. Further, the superabsorbent polymer was swollen for 30 minutes. Thereafter, on the swollen superabsorbent polymer, a piston was applied to uniformly give a load of 0.3 psi.

Subsequently, the stopcock of the cylinder was opened and a time for 20 mL of the physiological saline to pass through the swollen superabsorbent polymer was measured in the unit of seconds. Here, the meniscus was marked when 40 mL of physiological saline was filled in the cylinder and the meniscus was marked when 20 mL of the physiological saline was filled in the cylinder, and T1 of Equation 4 was determined by measuring a time taken to reach the level corresponding to 20 ml from the level corresponding to 40 mL.

The results are shown in Tables 1 and 2.

[Table 1]

| | | Unit | Comparative Example 1 | Comparative Example 3 | Comparative Example 4 | Example 1 | Example 2 |
|---|---|---|---|---|---|---|---|
| Surface crosslinking | Water | phr | 5.0 | 5.0 | 5.0 | 5.0 | 5.0 |
| | MeOH | | 3.0 | 3.0 | 3.0 | 3.0 | 3.0 |
| | EJ1030s | | 0.06 | 0.06 | 0.06 | 0.06 | 0.06 |
| | PDADMAC | | - | Polyethyleneimine 0.1 | - | 0.1 | - |
| | PMETAMS | | - | | - | - | 0.1 |
| Post-addition | Aerosil200 | | 0.1 | 0.1 | Aerosi1200 0.1 + PMETAMS 0.1 | 0.1 | 0.1 |
| Physical properties of product | CRC | g/g | 30.4 | 30.3 | 30.2 | 31.0 | 30.7 |
| | 0.7 AUP | g/g | 19.7 | 20.0 | 20.2 | 20.7 | 21.6 |
| | EEFC | g/g | 25.0 | 25.1 | 25.2 | 25.9 | 26.2 |
| | Vortex | sec | 24 | 24 | 24 | 21 | 20 |
| | Perm. | sec | 24 | 19 | 15 | 10 | 7 |

*PDADMAC: Poly(diallyldimethylammonium chloride) (manufacturer: SINOFLOC, Mw: 150,000 g/mol)

*PMETAMS: Poly(2-(methacryloyloxy)ethyltrimethylammonium methyl sulfate (manufacturer: Senka, Mw: 400,000 g/mol)

[Table 2]

| | | Unit | Comparative Example 2 | Example 3 | Example 4 | Example 5 | Example 6 | Example 7 |
|---|---|---|---|---|---|---|---|---|
| Surface crosslinking | Water | Phr | 7 | | | | | |
| | MeOH | | 3 | | | | | |
| | EJ1030s | | 0.025 | | | | 0.035 | |
| | PMETAMS | | - | 0.05 | 0.1 | 0.2 | 0.2 | 0.3 |
| Post-addition | Aerosi1200 | | 0.1 | | | | | |
| Physical properties of product | CRC | g/g | 30.9 | 31.2 | 31.1 | 31 | 30.1 | 30.6 |
| | 0.7 AUP | g/g | 12.5 | 13.1 | 14.8 | 16.0 | 20.2 | 20.2 |
| | EEFC | g/g | 21.7 | 22.2 | 23.0 | 23.5 | 25.2 | 25.4 |
| | Vortex | sec | 24 | 23 | 24 | 24 | 24 | 24 |
| | Perm. | sec | 20 | 17 | 16 | 14 | 11 | 11 |

As shown in Table 1, the superabsorbent polymers of Examples prepared according to the present invention were confirmed to have superior general absorption properties by further including the cationic polymer as the composition of the surface crosslinking solution during surface crosslinking, as compared to those of Comparative Examples.

Further, as shown in Table 2, even when the superabsorbent polymers were prepared using the composition in which the crosslinking density is lowered by reducing the content of the surface crosslinking agent, the superabsorbent polymers of Examples prepared according to the present invention were confirmed to have remarkably excellent absorbency under high pressure and permeability while maintaining the same level of other physical properties, as compared to those of Comparative Examples.

## Claims

**1.** A method of preparing a superabsorbent polymer, the method comprising:

the step of forming a water-containing gel polymer by crosslinking-polymerizing a water-soluble ethylenically unsaturated monomer having acidic groups, of which at least part is neutralized, in the presence of a polymerization initiator and an internal crosslinking agent;
the step of forming a base polymer powder by drying, pulverizing, and classifying the water-containing gel polymer; and
the surface crosslinking step of forming a surface-crosslinked layer by crosslinking the surface of the base polymer powder in the presence of a surface crosslinking agent and a cationic polymer,
wherein the cationic polymer includes quaternary ammonium ions in repeating units.

**2.** The method of claim 1, wherein the cationic polymer includes repeating units derived from ethylenically unsaturated monomers to which ammonium ions are linked.

**3.** The method of claim 1, wherein the cationic polymer includes cyclic ammonium ions in the repeating units.

**4.** The method of claim 1, wherein the cationic polymer includes any one or more selected from the group consisting of poly(diallyldimethylammonium chloride), poly(2-(methacryloyloxy)ethyltrimethylammonium methylsulfate), poly(2-dimethylamino)ethyl methacrylate methyl chloride quaternary salt), and poly(acrylamide-dimethylaminoethyl acrylate quaternary salt).

**5.** The method of claim 1, wherein the cationic polymer has a weight average molecular weight of 50,000 g/mol to 700,000 g/mol.

**6.** The method of claim 1, wherein the cationic polymer is included in an amount of 0.01 part by weight to 0.9 parts by weight with respect to 100 parts by weight of the base polymer.

**7.** The method of claim 1, wherein the surface crosslinking agent includes a polyhydric alcohol compound, a polyepoxy compound, a haloepoxy compound, or an alkylene carbonate compound.

**8.** The method of claim 1, wherein the surface crosslinking agent is used in an amount of 0.001 part by weight to 5 parts by weight with respect to 100 parts by weight of the base polymer.

**9.** A superabsorbent polymer comprising:

a base polymer powder including a crosslinked polymer of a water-soluble ethylenically unsaturated monomer having acidic groups, of which at least part is neutralized; and
a surface-crosslinked layer which is formed on the base polymer powder by further crosslinking the crosslinked polymer via a surface crosslinking agent,
wherein the surface-crosslinked layer includes a cationic polymer including quaternary ammonium ions in repeating units.

**10.** The superabsorbent polymer of claim 9, wherein the cationic polymer includes repeating units derived from ethylenically unsaturated monomers to which ammonium ions are linked.

**11.** The superabsorbent polymer of claim 9, wherein the cationic polymer includes cyclic ammonium ions in the repeating

units.

12. The superabsorbent polymer of claim 9, wherein the cationic polymer includes any one or more selected from the group consisting of poly(diallyldimethylammonium chloride), poly(2-(methacryloyloxy)ethyltrimethylammonium methylsulfate), poly(2-dimethylamino)ethyl methacrylate methyl chloride quaternary salt), and poly(acrylamide-dimethylaminoethyl acrylate quaternary salt).

13. The superabsorbent polymer of claim 9, wherein the surface crosslinking agent includes a polyhydric alcohol compound, a polyepoxy compound, a haloepoxy compound, or an alkylene carbonate compound.

14. The superabsorbent polymer of claim 9, wherein permeability of the superabsorbent polymer is 18 seconds or less.

15. The superabsorbent polymer of claim 9, wherein a centrifugal retention capacity (CRC) of the superabsorbent polymer is 25 g/g to 40 g/g, as measured in accordance with the EDANA method WSP 241.3.

16. The superabsorbent polymer of claim 9, wherein 0.7 psi absorbency under pressure (AUP) of the superabsorbent polymer is 10 g/g to 30 g/g, as measured in accordance with the EDANA method WSP 242.3.

17. The superabsorbent polymer of claim 9, wherein a vortex of the superabsorbent polymer is 40 seconds or less.

**INTERNATIONAL SEARCH REPORT**

International application No.
**PCT/KR2022/018380**

**A. CLASSIFICATION OF SUBJECT MATTER**

**C08J 3/24**(2006.01)i; **C08J 3/12**(2006.01)i

According to International Patent Classification (IPC) or to both national classification and IPC

**B. FIELDS SEARCHED**

Minimum documentation searched (classification system followed by classification symbols)

C08J 3/24(2006.01); A61F 13/49(2006.01); A61F 13/53(2006.01); C08F 2/10(2006.01); C08F 220/04(2006.01); C08J 3/075(2006.01); C08J 3/12(2006.01); C08J 9/236(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(superabsorbent polymer), 함수 겔 중합체(hydrogel polymer), 표면 가교제(surface crosslinking agent), 양이온성 고분자(cationic polymer)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0038081 A (LG CHEM, LTD.) 07 April 2021 (2021-04-07)<br>See claims 1-4; and paragraphs [0133]-[0139]. | 1-17 |
| Y | KR 10-1655104 B1 (EVONIK CORPORATION) 07 September 2016 (2016-09-07)<br>See paragraphs [0138]-[0145]. | 1-17 |
| A | KR 10-2018-0009508 A (HANWHA CHEMICAL CORPORATION) 29 January 2018 (2018-01-29)<br>See entire document. | 1-17 |
| A | KR 10-2017-0119806 A (HANWHA CHEMICAL CORPORATION) 30 October 2017 (2017-10-30)<br>See entire document. | 1-17 |
| A | JP 2007-505725 A (THE PROCTER & GAMBLE COMPANY) 15 March 2007 (2007-03-15)<br>See entire document. | 1-17 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 February 2023** | **28 February 2023** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

Form PCT/ISA/210 (second sheet) (July 2022)

**INTERNATIONAL SEARCH REPORT**
**Information on patent family members**

International application No.
**PCT/KR2022/018380**

| Patent document cited in search report | Publication date (day/month/year) | Patent family member(s) | Publication date (day/month/year) |
|---|---|---|---|
| KR 10-2021-0038081 A | 07 April 2021 | None | |
| KR 10-1655104 B1 | 07 September 2016 | CN 102833254 A | 19 December 2012 |
| | | CN 102833254 B | 30 March 2016 |
| | | CN 104039847 A | 10 September 2014 |
| | | CN 202243467 U | 30 May 2012 |
| | | EP 2797971 A1 | 05 November 2014 |
| | | EP 2797971 B1 | 05 December 2018 |
| | | JP 2015-503655 A | 02 February 2015 |
| | | KR 10-2014-0102264 A | 21 August 2014 |
| | | US 2015-0093575 A1 | 02 April 2015 |
| | | US 9440220 B2 | 13 September 2016 |
| | | WO 2013-101197 A1 | 04 July 2013 |
| KR 10-2018-0009508 A | 29 January 2018 | KR 10-2213451 B1 | 08 February 2021 |
| KR 10-2017-0119806 A | 30 October 2017 | KR 10-2242700 B1 | 21 April 2021 |
| JP 2007-505725 A | 15 March 2007 | CN 100423789 C | 08 October 2008 |
| | | CN 100859931 A | 08 November 2006 |
| | | EP 1518567 A1 | 30 March 2005 |
| | | EP 1518567 B1 | 28 June 2017 |
| | | US 2005-0070867 A1 | 31 March 2005 |
| | | US 7847144 B2 | 07 December 2010 |
| | | WO 2005-030280 A1 | 07 April 2005 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210163717
- KR 1020220155321


### Non-patent literature cited in the description


- **REINHOLD SCHWALM.** UV Coatings: Basics, Recent Developments and New Application. Elsevier, 2007, 115
- **ODIAN.** Principle of Polymerization. Wiley, 1981, 203